Europäisches Patentamt

European Patent Office

Office européen des brevets

(19)

(11) Veröffentlichungsnummer: **0 086 367**
**B1**

# (12) EUROPÄISCHE PATENTSCHRIFT

(45) Veröffentlichungstag der Patentschrift:
**30.04.86**

(21) Anmeldenummer: **83100661.4**

(22) Anmeldetag: **26.01.83**

(51) Int. Cl.⁴: **F 01 N 3/02**

(54) **Vorrichtung zur Reinigung der Abgase von Dieselmotoren, insbesondere bei Kraftfahrzeugen.**

(30) Priorität: **17.02.82 DE 3205673**

(43) Veröffentlichungstag der Anmeldung:
**24.08.83 Patentblatt 83/34**

(45) Bekanntmachung des Hinweises auf die Patenterteilung:
**30.04.86 Patentblatt 86/18**

(84) Benannte Vertragsstaaten:
**AT BE CH DE FR GB IT LI NL SE**

(56) Entgegenhaltungen:
**EP - A - 0 056 584**
**DE - A - 2 951 316**
**US - A - 3 441 381**
**US - A - 3 597 165**

(73) Patentinhaber: **ZEUNA-STÄRKER GMBH & CO KG,**
**Äussere Uferstrasse 61-69, D-8900 Augsburg 1 (DE)**
Patentinhaber: **Engelhard Kali-Chemie GmbH,**
**Postfach 220 Hans-Böckler-Allee 20,**
**D-3000 Hannover 1 (DE)**

(72) Erfinder: **Santiago, Enrique, Adalbert Stifter Strasse 8,**
**D-8901 Diedorf (DE)**
Erfinder: **Wolsing, Wilhelm, Wegsfeld 42,**
**D-3000 Hannover 91 (DE)**

(74) Vertreter: **Grättinger, Günter et al,**
**Wittelsbacherstrasse 5 Postfach 16 49, D-8130 Starnberg**
**(DE)**

## Beschreibung

Die Erfindung betrifft eine Vorrichtung zur Reinigung der Abgase von Dieselmotoren, insbesondere bei Kraftfahrzeugen.

Neben den als schädlich erkannten Rußteilchen enthalten die Abgase von Dieselmotoren nur verhältnismäßig kleine Mengen von Kohlenmonoxyd, Kohlenwasserstoffverbindungen und Stickoxyden. Bei bekannten Abgasfiltern für Dieselmotoren geht es daher in erster Linie darum, die Rußteilchen aufzufangen und zu verbrennen, wobei gewisse Emissionsgrenzen für den Kohlenwasserstoffanteil im Abgas einzuhalten sind. Diese Grenzen werden vorgegeben durch nationale Vorschriften, maßgeblich seitens der Environmental Protection Agency (EPA) der Vereinigten Staaten von Amerika. Diese Vorschriften legen die zulässige Emission an Rußpartikelchen für das Modelljahr 1982 auf 0,6 g/mi (in Worten: Gramm pro Meile) und für das Modelljahr 1985 auf 0,2 g/mi für Personenkraftfahrzeuge fest. Derzeitige Vorstellungen für das Jahr 1990 gehen von einer Reduzierung der Rußpartikeichen, bezogen auf die Gesamtdieselabgase um 74% aus. Diese Vorschriften sind dazu bestimmt, die Umweltbelastung erheblich zu reduzieren, wobei man in Rechnung stellt, daß beispielsweise im Jahr 1985 ca. 8 Mio. mit Dieselmotoren ausgerüstete Kraftfahrzeuge hergestellt werden und daß ein Personenkraftwagen ohne Abgasfilter durchschnittlich 30 bis 40 kg Rußpartikelchen, bezogen auf eine Fahrstrecke von 100.000 km an die Umwelt ausscheidet.

In der Fachwelt ist man sich darüber einig, daß die oben genannte Emissionsgrenze für 1985 nur durch zusätzliche Filtervorrichtungen im Dieselabgas erreicht werden kann. Die Fachwelt geht ferner davon aus, daß geeignete Filtervorrichtungen Einrichtungen zur Regeneration benötigen, d.h. die anfallenden Rußpartikelchen werden gesammelt und abgebrannt, sobald die Abgastemperatur die bei 450 bis 500° C liegende Verbrennungstemperatur des Rußes erreicht hat.

Ein bekannter Rußfilter für Dieselabgase (EP-A-56 584) besteht aus einem Monolithen aus poröser Keramik, der aus zueinander parallelen dünnwandigen Kanälen aufgebaut ist, welche über dessen gesamte Länge durchlaufen. Die Kanäle sind an ihren Stirnseiten nach einem Schachbrettmuster verschlossen bzw. offen, wobei jeder Kanal ein offenes und ein verschlossenes Ende besitzt. Bei Einschaltung eines derartigen Keramikfilters in die Dieselabgase wird das Auspuffgas, welches durch die einlaßseitig offenen Kanäle eintritt gezwungen, durch die porösen Kanalwände hindurch in die benachbarten, auslaßseitig offenen Kanäle zu strömen. Dabei sammeln sich die Rußpartikelchen, die zu 50% eine Größe von mehr als 0,5 µm haben und daher die Kanalwände nicht passieren können, in den stromaufwärts offenen Kanälen an. Der Abbrand des in einem derartigen Filter angesammelten Rußes erfolgt nicht vor Erreichen der genannten Entzündungstemperatur und nur bei einer bestimmten Sauerstoffkonzentration im Abgas. Zwischen zwei derartigen Regenerationsvorgängen kommt es mit zunehmender Beladung des Filters zu einem nicht unerheblichen Anstieg des Abgasgegendrucks. Bei besonders hoher Beladung kann der Rußabbrand sehr heftig und unter Erzeugung unerwünscht hoher Temperaturen verlaufen. Unter ungünstigen Bedingungen besteht sogar die Gefahr, daß der Schmelzpunkt des Keramikmaterials überschritten wird. Obwohl mit einem derartigen Teilchenfilter eine hohe Filterwirkung von etwa 70% erreichbar ist, d.h. nur 30% der Partikelchen im Abgas gelangen durch den Auspuff nach außen, sind die Abbrandbedingungen wegen des hohen und mit zunehmender Betriebsdauer im Grundniveau sogar allmählich ansteigenden Abgasgegendrucks und des plötzlichen starken Temperaturanstiegs bei der Entzündung des Rußes verbesserungswürdig.

Eine Vergleichmäßigung des Rußabbrandes wird erreicht durch eine andere bekannte Filtervorrichtung (DE-A 3 024 491) bei welcher die Auspuffgase durch eine mit einem Katalysator versehene Kammer geschickt werden, wobei der Katalysator ein Substrat aus fadenförmigem, metallischem Material in maschenbildender, gewobener oder zerklüfteter Form ist, welches mit katalytischem Material aus Metallen, Metallegierungen und Metalloxyden beschichtet ist. Im Katalysator kommt es dabei zu einer katalytischen Oxidation der rauchbildenden Partikel der Abgase, die infolge der Katalysatorwirkung nicht erst bei Temperaturen über 450° C sondern bereits bei Temperaturen ab 200° C anläuft. Die damit erzielte Vergleichmäßigung der Verbrennung der Rußpartikelchen im Dieselabgas ermöglicht den Betrieb dieses bekannten Katalysators bei verhältnismäßig niedrigem Gegendruck des Abgases. Die Rußpartikelchen werden nicht mehr angesammelt sondern brennen im Bereich des Katalysators im Rhythmus der Abgaspulsation kontinuierlich ab. Dabei reicht für den Verbrennungsvorgang im Katalysator die bei Dieselmotoren übliche Betriebstemperatur von 400° C ohne weiteres aus; Voraussetzung für die katalytische Oxidation ist lediglich ein Luftüberschuß im Abgas und die Anwesenheit von Kohlenwasserstoffen, die unter der Katalysatorwirkung exotherm verbrennen. Die erreichte Filterwirkung liegt allerdings deutlich niedriger als bei dem oben erläuterten keramischen Filter, nämlich bei 40 bis 50%.

Demgegenüber liegt der vorliegenden Erfindung die Aufgabe zugrunde, einen Filter für Dieselmotorabgase zu schaffen, der hinsichtlich der erzielten Filterwirkung mit dem bekannten Keramikfilter vergleichbar ist und bei dem eine gleichmäßige Partikelverbrennung bei verhältnismäßig niedrigem Abgasgegendruck und niedriger Temperatur erzielt wird. ·

Diese Aufgabe wird erfindungsgemäß gelöst durch eine in den Abgasstrom eingeschaltete Vielzahl von Makrozellen in einem Substrat aus poröser Keramik, welche jeweils eine mit dem Abgasstrom verbundene Öffnung aufweisen und alle oder zu einem Teil mit einem gasdurchlässigen Katalysatorträger, dessen Oberfläche mit katalytischem Material beschichtet ist, ganz oder teilweise gefüllt sind.

Dieser nach den Unteransprüchen 2 bis 4 in seinen Einzelheiten noch ausgestaltete Grundgedanke vereinigt auf sich die Vorteile der gleichmäßigen katalytischen Verbrennung der Abgase und der teilweisen Oxidation von Partikeln bei Temperaturen kleiner als 450°C mit denen der Ausfilterung auch feinster Rußpartikelchen im Bereich der Wände der den Katalysator enthaltenden Makrozellen eines keramischen Substrats. Die in den Poren der Wände und deren Oberfläche gesammelten Rußpartikelchen, die den Katalysator ohne Verbrennung passiert haben, werden im Gegensatz zu dem bekannten keramischen Filter gleichmäßig und bei Temperaturen unterhalb 450° C verbrannt. Offenbar wird die erforderliche Energie durch die katalytische Reaktion geliefert. Dem kommt entgegen, daß der bevorzugt in Form von Metallfäden vorhandene Katalysatorträger den Hohlraum der Makrozellen bis zu den Wänden hin ausfüllt, wodurch die katalytische Energie direkt oder, in Form von Strahlung auf die porösen Wände der Makrozellen, an denen die flüchtigen Rußpartikelchen gefangen sind, einwirken kann. Die katalytische Energie entsteht im wesentlichen bei der Oxidation von Kohlenwasserstoffen, die in freier Form oder angelagert an feste Kohlepartikel im Abgas vorhanden sind.

Nach einem weiteren Lösungsvorschlag sind die mit dem Katalysator gefüllten Makrozeilen als langgestreckte einseitig offene Kanäle in einem monolithischen Keramikkörper ausgebildet, wobei die Kanäle abwechselnd stromaufwärts oder stromabwärts offen bzw. geschlossen sind, etwa nach dem Bauprinzip des bekannten eingangs erörterten Keramikfilters aus Zellular-Keramik. Unterschiedlich zu den bekannten Keramikfiltern sind die Kanalquerschnitte erheblich größer; statt 50 bis 200 (leerer) Kanäle pro Quadratzoll sieht die nach dem vorliegenden Lösungsvorschlag gewählte Keramikstruktur nur etwa 5 bis 15 Kanäle pro Quadratzoll, das sind etwa 0,5 bis 4 Kanäle pro Quadratzentimeter vor. Diese Kanäle sind mit Einsatzkörpern in Form von Katalysatoren gefüllt, wobei der Katalysatorträger aus Metallfäden in Form von Draht oder Bandmaterial besteht, welche entsprechend der Hohlform der Kanäle vorgepreßt sind.

Hingegen wird nach dem erfindungsgemäßen Lösungsvorschlag die Wandstärke der Kanäle etwa gleich den bekannten Keramikfiltern gewählt; sie liegt unter 1 mm, bevorzugt zwischen 0,3 und 0,7mm.

Eine bevorzugte Ausführungsform der Erfindung sieht vor, daß pro Quadratzentimeter Stirnfläche des Keramikköpers nur ein vollständiger Kanalquerschnitt vorgesehen ist. Es wurde bereits betont, daß die katalytischen Einsatzkörper im Querschnitt der Hohlform der Kanäle entsprechen; hinsichtlich ihrer Länge können sie die Kanäle ganz oder teilweise ausfüllen, wobei sich ein besserer Halt ergibt, wenn sie sich über die gesamte Kanallänge erstrecken.

Zur Erreichung der angestrebten Filterwirkung von 60 bis 80% kann es nach der Erfindung ausreichen, daß nur die stromaufwärts offenen Kanäle jeweils mit einem Einsatzkörper versehen sind, da davon auszugehen ist, daß nur noch ein sehr kleiner Anteil der Rußpartikelchen, und davon wiederum nur die mit den kleinsten Abmessungen von einem stromaufwärts offenen Kanal durch die Kanalwände hindurch in einen stromabwärts offenen Kanal gelangen können. Am Anmeldungsgegenstand ist darüberhinaus besonders vorteilhaft daß neben der üblichen Befestigung des Keramikmonolithen keine besonderen Befestigungsmittel für die Einsatzkörper im Inneren der Kanäle erforderlich sind. Diese werden durch die Oberflächenreibung des Drahtgestrickmaterials an den Kanalwänden gehalten. Diese Möglichkeit bringt eine deutliche Verbesserung gegenüber dem eingangs erläuterten bekannten katalytischen Filter bei dem aufwendige Vorrichtungen zur Befestigung des Katalysatorträgers im Inneren einer Brennkammer erforderlich sind.

Hinsichtlich des Abgasgegendrucks wird eine deutliche Absenkung gegenüber dem bekannten, ohne jede katalytische Wirkung arbeitenden Keramikfilter erzielt. Erst die katalytische Verbrennung sorgt für einen kontinuierlichen Rußabbrand im Bereich der Katalysator-Einsatzkörper. Die dabei entstehende Energie wird wiederum unmittelbar benutzt zum Abbrand der an den Kanalwänden gefangenen Rußpartikelchen, die den Katalysatoreinsatzkörper unverbrannt passieren konnten, so daß es zu keinerlei Rußansammlungen und damit zu keinerlei Verstopfungen der Kanalwände bzw. der Kanäle selbst kommt. Diese bleiben stets frei für den ungehinderten Durchtritt der Abgase mit dem Ergebnis, daß der Abgasgegendruck das gewünschte niedrige Niveau von etwa 0,1 bis 0,2 bar aufweist.

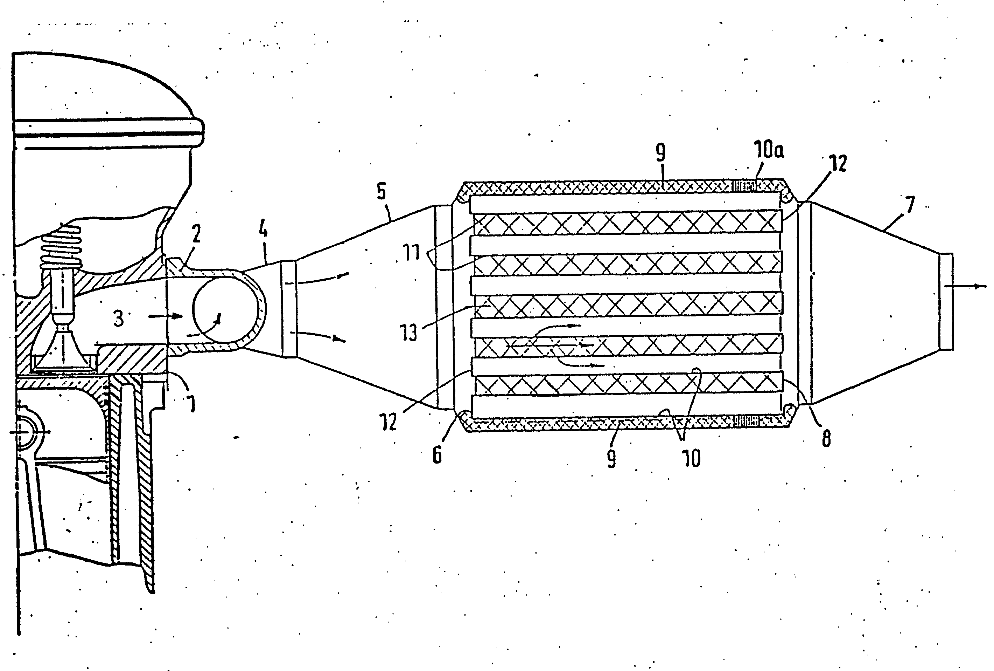

Im folgenden wird ein Ausfürungsbeispiel der Erfindung anhand der Zeichnung welche einen axialen Längsschnitt durch eine an einen Dieselmotor angeschlossene Filtervorrichtung zeigt, erläutert.

Der Zylinderkopf 1 eines Dieselmotors ist mit einem Abgassammler 2 verbunden, welcher an dem Auslaß 3 des Motors angeschlossen ist. Vom Abgassammler 2 führt ein Rohrstutzen 4 die Abgase über einen Anschlußstutzen 5 in das Gehäuse 6 einer Filtervorrichtung für diese Abgase, deren Strömungsverlauf mit Pfeilen angegeben ist. Stromabwärts besitzt das Gehäuse 6 wiederum einen Anschlußstutzen 7 für den Anschluß an die restliche Auspuffleitung. Im Inneren des Gehäuses 6 ist ein monolithischer Keramikkörper 8 stoßsicher mittels einer zwischen Gehäuse 6 und Umfangsfläche des Keramikkörpers angeordneten Drahtgestrickhülle 9 abgestützt. Damit durch die Drahtgestrickhülle 9 keine Abgase passieren können ist in diese ein gasdichter Ring 10 a integriert. Der monolithische Keramikkörper 8 besteht aus porösem Keramikmaterial, z.B. wie an sich bekannt aus Kordierit-Keramik. Der Monolith ist aufgebaut aus über dünne Wände aneinandergrenzenden axialen, zueinander parallelen Kanälen 10, 11, welche, im Querschnitt gesehen, abwechselnd, in der Draufsicht auf die Stirnseiten des Monolithen gesehen, schachbrettartig verteilt entweder am stromaufwärts liegenden oder am stromabwärts liegenden Ende verschlossen sind. Die stromaufwärts offenen Kanäle 11 sind also stromabwärts, die stromabwärts offenen Kanäle 10 sind stromaufwärts jeweils durch einen Boden 12, ebenfalls aus keramischem Material, verschlossen. Der Boden 12 kann auch eine größere Dicke als die Kanalwände haben. Die in die stromaufwärts offenen Kanäle 11 einströmenden Abgase diffundieren, wie durch Pfeile angedeutet, durch die Kanalwände hindurch in benachbarte Kanäle 10, welche abgasseitig offen sind.

Von besonderer Wichtigkeit ist nun, daß die Kanäle 10, 11 ausgefüllt sind mit Katalysatoreinsätzen 13, welche von den offenen Enden her in die Kanäle hineingesteckt werden. Es handelt sich bei den Katalysatoreinsätzen 13 um formgepreßte Drahtgestrickkörper, wobei der Draht mit einer katalytisch wirksamen Oberfläche im Sinne eines Oxidationskatalysators beschichtet ist. Die Einsätze 13 haben eine der Hohlform der Kanäle entsprechende Querschnittsform, beispielsweise quadratisch, so daß sie sich einschieben lassen und dort ohne besondere Halterung fixiert sind. Nur der besseren zeichnerischen Darstellung wegen sind die Einsätze in den stromabwärts offenen Kanälen 10 ohne Schraffur dargestellt. Allerdings ist es auch möglich, die stromabwärts offenen Kanäle 10 leer zu lassen, d.h. darin keine Einsätze 13 anzuordnen. Im Bereich der Katalysatoreinsätze 13 kommt es zur katalytischen Verbrennung der Rußpartikelchen im Abgas, wobei die Kohlenwasserstoffbestandteile die an die Kohlenstoffpartikelchen angelagert sind, mit dem Sauerstoffgehalt des Abgases verbrannt werden zu Kohlendioxyd und Wasser; reiner Kohlenstoff wird zu Kohlendioxyd verbrannt. Die nicht bereits im Bereich der Katalysatoreinsätze 13 verbrannten Partikelchen setzen sich in den Poren der Kanalwände und an deren Oberfläche fest und werden dort durch die Energieeinwirkung aus der katalytischen Verbrennung ebenfalls verbrannt. Nur ein sehr geringer Teil der im Abgas enthaltenen Rußpartikelchen, nämlich mit besonders kleinen Abmessungen, gelangt durch die Kanalwände in abgasseitig offene Kanäle und von dort, falls darin keine katalytische Nachverbrennung stattfindet, in das aus der Filtervorrichtung ausströmende Abgas. Der Anteil dieser Partikelchen liegt bei ca. 20 bis 30%. Selbstverständlich ist für die katalytische Reaktion im Bereich des Rußfilters eine bestimmte Abgastemperatur erforderlich. Infolge der katalytischen Verbrennung wird diese Temperatur jedoch von allen Dieselmotortypen, also auch solchen mit verhältnismäßig niedrigen Verbrennungstemperaturen erreicht.

Normalerweise beträgt die Temperatur in dem aus dem Motorbrennraum austretenden Abgas ca. 400° C. Die katalytischen-Reaktionen laufen bereits ab 200° C ab. Das Drahtgestrickmaterial der Einsatzkörper 13 besteht bevorzugt aus einer korrosionsbeständigen Metalllegierung, mit Nickel- und Chromanteilen. Derartige Materialien sind für den gleichen Zweck bekannt; dies gilt gleichermaßen für die katalytisch aktive Beschichtung die aus verschiedensten Metallen, deren Legierungen und intermetallischen Verbindungen zusammengesetzt ist.

Was den keramischen Monolithen betrifft so entspricht die zeichnerische Darstellung einer möglichen tatsächlichen Ausführungsform. Davon abweichend sind selbstverständlich kleinere und größere Kanalquerschnitte denkbar. Die Dichte der Kanäle, gemessen pro stirnseitiger Flächeneinheit, liegt zwischen 0,5 und 4 Kanälen pro $cm^2$ Stirnfläche. Die zeichnerische Darstellung liegt an der oberen Grenze dieses Bereiches. Die Wandstärke zwischen den Kanälen liegt etwa zwischen 0,3 und 0,7 mm. Die Porosität des Keramikmaterials liegt zwischen 35 und 55%, bei einem mittleren Porendurchmesser von 10 bis 35 $\mu$m.

**Patentansprüche**

1. Vorrichtung zur Reinigung der Abgase von Dieselmotoren, insbesondere bei Kraftfahrzeugen, gekennzeichnet durch eine in den Abgasstrom eingeschaltete Vielzahl von Makrozellen (11) in einem Substrat aus poröser Keramik, welche jeweils eine mit dem Abgasstrom verbundene Öffnung aufweisen und alle oder zu einem Teil mit einem gasdurchlässigen Katalysatorträger (13), dessen Oberfläche mit katalytischem Material beschichtet ist, ganz oder teilweise gefüllt sind.

2. Vorrichtung nach Anspruch 1, dadurch gekennzeichnet, daß das katalytische Material aus Metallen, Legierungen und intermetallischen Verbindungen besteht, die eine oxidierende Wirkung haben.

3. Vorrichtung nach Anspruch 1 oder 2, dadurch gekennzeichnet, daß der gasdurchlässige Katalysatorträger aus Metallfäden in Form von Draht oder Bandmaterial besteht, welche zu einzelnen, der Hohlraumform der Makrozellen entsprechenden Einsatzkörpern (13) verdichtet sind.

4. Vorrichtung nach einem der Ansprüche 1 bis 3, dadurch gekennzeichnet, daß die Makrozellen in einem monolithischen Keramikkörper ausgebildet sind.

5. Vorrichtung nach Anspruch 4, dadurch gekennzeichnet, daß die Makrozellen, langgestreckte einseitig offene Kanäle (10, 11) sind.

6. Vorrichtung nach Anspruch 4 oder 5, dadurch gekennzeichnet, daß die Makrozellen durch ein Bündel paralleler, in Strömungsrichtung der Abgase ausgerichteter abwechselnd entweder stromaufwärts oder stromabwärts offener bzw. stromabwärts oder stromaufwärts am Ende geschlossener Kanäle gebildet sind, derart, daß Öffnungen und Verschlüsse der Kanäle (10, 11) über die Stirnseiten des Keramikkörpers (8) schachbrettartig verteilt sind und daß wenigstens die stromaufwärts offenen Kanäle (11) jeweils mit einem Einsatzkörper (13) versehen sind.

7. Vorrichtung nach einem der Ansprüche 5 bis 6, dadurch gekennzeichnet, daß bei einer größten Wandstärke zwischen benachbarten Kanälen (10,11) des Keramikkörpers (8) von weniger als 1,0 mm die Anzahl der Kanäle pro $cm^2$ Stirnfläche des Keramikkörpers 0,5 bis 4 beträgt.

8. Vorrichtung nach Anspruch 7, dadurch gekennzeichnet, daß pro $cm^2$ Stirnfläche des Keramikkörpers (8) nur ein vollständiger Kanalquerschnitt vorgesehen ist.

9. Vorrichtung nach Anspruch 7, dadurch gekennzeichnet, daß die Wandstärke der Kanäle(10,11) zwischen 0,3 und 0,7 mm beträgt.

10. Vorrichtung nach einem der Ansprüche 5 bis 9, dadurch gekennzeichnet, daß die Kanäle (10,11) quadratischen Querschnitt aufweisen.

11. Vorrichtung nach einem der Ansprüche 1 bis 10, dadurch gekennzeichnet, daß die Einsatzkörper (13) im Querschnitt entsprechend der Hohlform der Kanäle (10,11) und in ihrer Länge entsprechend der ganzen oder teilweisen Längserstreckung der Kanäle (10,11) ausgebildet sind.

## Claims

1. A device for cleansing the exhaust gases of diesel engines, especially for motor vehicles, characterized by a plurality of macrocells (11), in a substrate of porous ceramic, said plurality being positioned in the flow of exhaust gas, with said macrocells having an opening connected with the stream of exhaust gas, and some or all being wholly or partly filled with a gas-permeable catalyst support (13), whose surface is coated with catalytic material.

2. A device according to claim 1, characterized in that the catalytic material comprises metals, alloys, and intermetallic compounds which have an oxidizing effect.

3. A device according to claim 1 or 2, characterized in that the gas-permeable catalyst support comprises metal threads in the form of wire or tape material, which are compacted to individual insert bodies (13) corresponding to the shape of the hollow space of the macrocells.

4. A device according to any of claims 1 to 3, characterized in that the macrocells are formed in a monolithic ceramic body.

5. A device according to claim 4, characterized in that the macrocells are longitudinally extended channels (10, 11) open on one side.

6. A device according to claim 4 or 5, characterized in that the macrocells are formed by a bundle of parallel channels, aligned in the flow direction of the exhaust gases, which are alternately open either upstream or downstream and which are alternately closed either downstream or upstream respectively at the end such that at the openings and closures of the channels (10, 11) are distributed over the frontal sides of the ceramic body (8) in checkerboard fashion, and at least the channels (11) which are open upstream are provided with an insert body (13).

7. A device according to any of claims 5 and 6, characterized in that the wall thickness between neighboring channels (10, 11) of the ceramic body (8) has a maximum value less that 1.0 mm and the number of channels per square centimeter frontal surface of the ceramic body is in the range from about 0,5 to 4.

8. A device according to claim 7, characterized in that only one complete channel cross section is provided per square centimeter frontal surface of the ceramic body (8).

9. A device according to claim 7, characterized in that the wall of the channels (10, 11) is in the range between about 0,3 and 0,7 mm thick.

10. A device according to any of claims 5 to 9, characterized in that the channels have a square cross section.

11. A device according to claim 1 characterized in that the insert bodies (13) have a cross section corresponding to the hollow shape of the channels (10, 11) and length corresponding to the total or partial longitudinal extend of the channels (10, 11).

## Revendications

1. Dispositif pour l'épuration des gaz d'échappement des moteurs Diesel, en particulier sur les véhicules automobiles, caractérisé par de multiples macrocellules (11) interposées dans le courant de gaz d'échappement, dans un substrat en céramique poreuse, qui présentent chacune une ouverture reliée au courant de gaz d'échappement et sont, toutes ou en partie, remplies totalement ou partiellement d'un support de catalyseur (13) perméable aux gaz, dont la surface est revêtue de matière catalytique.

2. Dispositif selon la revendication 1, caractérisé par le fait que la matière catalytique est formée de métaux, alliages et composés intermétalliques qui ont une action oxydante.

3. Dispositif selon l'une des revendications 1 et 2, caractérisé par le fait que le support de catalyseur perméable aux gaz est formé de filaments métalliques sous forme de fil ou de matière en bande, qui sont comprimés en différents corps d'insertion (13) correspondant à la forme de cavité des macrocellules.

4. Dispositif selon l'une des revendications 1 à 3, caractérisé par le fait que les macrocellules sont formées dans un corps monolithique en céramique.

5. Dispositif selon la revendication 4, caractérisé par le fait que les macrocellules sont des canaux allongés (10, 11) ouverts d'un côté.

6. Dispositif selon l'une des revendications 4 et 5, caractérisé par le fait que les macrocellules sont formées par un faisceau de canaux parallèles alignés dans la direction d'écoulement des gaz d'échappement, alternativement ouverts à l'extrémité soit vers l'amont soit vers l'aval, et fermés à l'extrémité soit vers l'aval soit vers l'amont, de telle sorte que les ouvertures et fermetures des canaux (10, 11) sont réparties sur les côtés frontaux du corps en céramique (8) à la façon d'un échiquier et qu'au moins les canaux ouverts vers l'amont (11) sont munis chacun d'un corps d'insertion (13).

7. Dispositif selon l'une des revendications 5 à 6, caractérisé par le fait qu'avec une épaisseur maximale de paroi entre canaux (10, 11) voisins du corps en céramique (8) inférieure à 1,0 mm, le nombre des canaux par cm$^2$ de surface frontale du corps en céramique est de 0,5 à 4.

8. Dispositif selon la revendication 7, caractérisé par le fait que par cm$^2$ de surface frontale du corps en céramique (8), il est prévu seulement une section complète de canal.

9. Dispositif selon la revendication 7, caractérisé par le fait que l'épaisseur de paroi des canaux (10, 11) est de 0,3 à 0,7 mm.

10. Dispositif selon l'une des revendications 5 à 9, caractérisé par le fait que les canaux (10, 11) présentent une section carrée.

11. Dispositif selon l'une des revendications 1 à 10, caractérisé par le fait que les corps d'insertion (13) sont constitués, en section, conformément à la forme creuse des canaux (10, 11) et en leur longueur, conformément à l'extension longitudinale totale ou partielle des canaux (10, 11).

0 086 367